# EUROPEAN PATENT APPLICATION

(11) **EP 0 526 054 A2**
(43) Date of publication of application: **03.02.1993**
(21) Application number: 92306547.8
(22) Date of filing: 16.07.1992
(51) Int. Cl.: G06F 11/00

(54) **Monitoring execution of a computer program to provide test coverage analysis**

(30) Priority: 26.07.1991 GB 9116163
(71) Applicant: RESEARCH MACHINES PLC, Milton, Abingdon Oxon OX14 4 SE (GB)
(72) Inventor: Burton-Cundall, Brian David, Oxford, OX4 3EG (GB)
(74) Representative: Unwin, Stephen Geoffrey

(57) **Abstract**

A computer system for monitoring execution of a computer program to provide test coverage analysis thereof comprising: a memory (10); processing means (11 for running a program stored in the memory (10); interrupt means (25) responsive to words of a program stored in the memory (10) in which a predetermined bit position (test bit) is in a predetermined (set) state and which is arranged to interrupt running of the program when such a word is executed; and recording means (10) for recording the words causing interrupts thereby recording which of the said words have been executed.

## Description

The present invention relates to a computer system for monitoring execution of a computer program to provide test coverage analysis thereof.

### Software development

Any general purpose computer system requires a variety of software to enable it to perform the desired tasks. The desired functions of such systems are continually increasing, and this means that new items of software are continually being written and existing items updated.

A typical commercial program is fairly elaborate. Although its general function may often be expressed very briefly (e.g. a word processor or a spreadsheet), the number of detailed features which it provides is extremely large, and the number of options which it provides is similarly large. The task of writing such a program is a lengthy and intellectually demanding one, requiring consideration of several levels of detail, from the top level of simply naming the type of program (e.g. word processing), through various levels such as choosing the main options (e.g. Spell checker, and if so, integral or an option? Print control? Footnote facility? ) down through more detailed matters (e.g. How and when should text be relayed when changes are made in existing text? What non-standard characters should be provided, and how? What about accents?) to the level of individual lines of source code.

Most software is used by users who have neither the time nor the ability to analyse the program in detail. Although users accept that they will probably have to expend considerable time and effort learning to use the program effectively, they expect the program to perform according to its specification; it must do what the accompanying documentation (primarily the instruction manual) says it does with a high degree of reliability.

It is unfortunately well established that errors are likely to occur in the writing of a program. There is a wide variety of types of errors, arising from a wide variety of causes. There can be high-level basic omissions or faulty implementations of major functions. Writing two sections of the program with one depending on (or supplying data to) the other and then amending one of the two sections without correspondingly amending the other can produce intermediate-level faults; and low-level errors can arise from using two different names for the same variable at different places, or using the same name for two different variables in different sections of the program. (There are also, of course, many other causes of errors.)

It is therefore necessary to test a program fairly rigorously before releasing it commercially. However, the time taken in testing and its cost must be kept within reasonable bounds, otherwise the useful life of the program may approach expiry before it is released and its cost may become excessive.

Such testing can generally be divided into three stages: component testing, integration testing, and confidence testing. Most programs of substantial size are developed as a set of components which are then combined to form the complete program. Component testing is the testing of the individual components, and integration testing is the testing of whether the combined components perform together correctly - i.e. whether their interfacing is correct. Following that, confidence testing checks whether the program as a whole performs the required functions. (Obviously, components can be made up of subcomponents, and the testing procedure will then be correspondingly nested.)

It will be apparent from the above discussion that a typical program is (as stated) fairly elaborate and that it wilt include :an extremely large number of conditional branch points. It is clearly highly desirable to achieve exhaustive branch testing - that is, for all possible branches of the program to be exercised during testing.

Unfortunately, the detailed structure of the program, and in particular the various branch points, will generally have only a very rough correspondence with the nature of the test input conditions and data. It is therefore not generally feasible to choose in advance sets of test input conditions and data which will be known to exercise all program branches and branch points.

To achieve exhaustive branch testing, therefore, an iterative procedure generally has to be employed, in which the test coverage of the program branches is monitored and further sets of test input conditions and data are constructed to exercise program branches which have not already been tested. It is necessary, for this, to be able to determine which branches of the program have been exercised at each stage. Such determination is !termed coverage analysis.

One way to perform coverage analysis is to insert additional temporary test code in each branch that requires testing, so that a record can be kept of which branches have been tested. This has several drawbacks. The insertion of the test code is itself error prone; the monitoring procedure may also be subject to errors; the inserted test code may interact with the original code to produce errors (or suppress them); and the program may overflow the available space when the test code is inserted. Further, the extra test code slows down the execution of the program, and any timing related errors will therefore be changed (some real errors may be masked, and some errors may be introduced by the test code).

If the test code is left in the program permanently, this will considerably increase the size of the program, and its running speed will be considerably reduced.

It is also possible to connect a hardware coverage analyser to the system which will run the program being tested, to track and record the execution of the program in real time. To avoid the problem of the testing itself changing timing related errors, the coverage analyser has to run faster than the system running the program under test. This means that a hardware coverage analyser is expensive.

According to a first aspect of the present invention, there is provided a computer system for monitoring execution of a computer program to provide test coverage analysis thereof, the system comprising: a memory; processing means for running a program stored in the memory; interrupt means responsive to words of a program stored in the memory in which a predetermined bit position (test bit) is in a predetermined (set) state and arranged to interrupt running of the program when such a word is executed; and recording means for recording the words causing interrupts thereby recording which of the said words have been executed.

According to a second aspect of the invention, there is provided a method of monitoring the execution of a computer program to provide test coverage analysis thereof, the method comprising: storing the program in a memory; running the program; detecting the execution of words of the program in which a predetermined bit position (test bit) is in a predetermined (set) state and thereupon interrupting the running of the program; and recording the words causing the interrupts thereby recording which of the said words have been executed.

Preferred features of the invention will be apparent from the following description and from the subsidiary claims of the specification.

It should be noted that the term execute is used in this specification to refer to any part of a fetch/execute cycle of a program word.

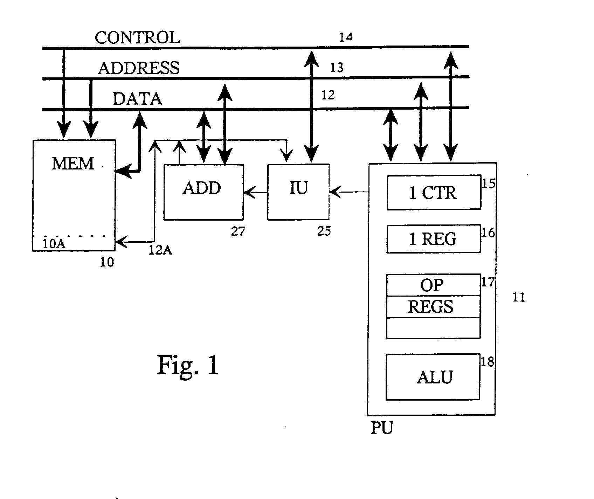

The invention will now be further described, merely by way of example, with reference to the accompanying drawing which shows a schematic diagram of a computer system according to an embodiment of the invention.

Before this embodiment is described in detail, the manner in which coverage analysis is carried out will first be discussed.

Any particular program to be tested will be designed to run on a computer having particular characteristics (of which the instruction set and the word length are of major importance). The program and a computer on which it is intended to run together form a computer system and we are concerned primarily with systems in which the computer is of the personal computer type, although it will be realized that this is not an essential limitation.

The coverage analyser system comprises a computer which is compatible with the computer on which the program is designed to run (and may be exactly the same type of computer), with some minor modifications (which are discussed further below). The program to be tested is run on the coverage analyser computer together with the appropriate additional software to perform the coverage analysis.

In operation, the program to be tested is processed by the coverage analyser system using suitable sets of test input conditions and data. This processing of the program involves running it in essentially the way in which it would normally run but involves further functions exclusive to the coverage analyser system, as a result of which the system determines the test coverage of the program resulting from the sets of test input conditions and data.

Further sets of test input conditions and data may be designed and further test runs may be made, if necessary, to increase the coverage. If errors are found, then the program is modified, and retested either from the stage already reached or in *toto*. This process is continued until a desired degree of coverage is achieved.

The basic principle of the coverage analyser system is that instructions of the program which have been executed in the processing of the program are recorded. There are two aspects of this which require more detailed discussion: which instructions are recorded, and how they are recorded.

It is convenient to consider first how the recording is achieved. The instructions to be recorded are identified by their memory addresses and one way to record the instructions is to record their memory addresses as the corresponding instructions are executed. This yields a list of memory addresses. In practice, it will be necessary to sort these into order once the list is finished. These addresses can then be matched with the instructions of the program being tested, and those instructions which have not been executed will thus become apparent.

A second and preferred way of recording the instructions which have been executed is to construct a bit map in the system memory of the memory addresses. Such a map bears a more direct relationship with the program to be tested than a listing of addresses. It will also usually require much less memory space than a listing, particularly as the coverage approaches 100% and all instructions need to be recorded, as each address requires only 1 bit for its recording rather than a fullword, e.g. of 8, 16, or 32 bits. The program being tested will contain operands as well as instructions, and the bit map will map all words in the program, so the factor by which the memory space is reduced will not be as great as the word length. On the other hand, if the word length is small, more than 1 word may be required to record a memory address. With this technique, the coverage analyser also, of course, has to convert the instruction addresses into bit map locations.

As for which instructions are to be recorded, there are two main options; recording all instructions, or recording only some of the instructions.

All instructions could be recorded but this has the drawback that every run of the coverage analyser system will produce a large amount of information, and analysing this may require a great deal of effort and be very slow. This method is practical for relatively short programs, e.g. as provided within a 64K ROM, but becomes increasingly impractical with larger programs.

If the execution of only some instructions is to be recorded, then it is necessary to give the instructions which are to be recorded some distinguishing characteristic. In the system to be described, this is achieved by use of an additional or spare bit (a test bit) in the instruction format. The coverage analyser system thus requires a word size 1 bit larger than otherwise required by the program being tested.

The discussion has so far considered solely the recording of the execution of instructions. However, as mentioned above, the program to be tested contains operands as well as instructions. It is therefore worth considering briefly whether the reading of operands should be recorded as well as the execution of instructions. However, this is not in fact a matter of particular importance.

If the execution of instructions is to be recorded while the reading of operands is not, then it is necessary to be able to distinguish between instructions and operands. In general, there is no great difficulty in designing the coverage analyser system to distinguish between instructions and operands. Also, if the instructions include a test bit, then a similar test bit can usually be included in operands, so whether the reading of operands is recorded or not can be put under user control.

In a preferred form of the coverage analyser system, the program to be tested is provided, in each instruction with a test bit (as described above) which is not used when the program is normally run and the coverage analyser system includes interrupt means responsive to the test bit in an instruction, and means responsive thereto for changing the state of the test bit in the address containing that instruction.

Unless otherwise stated, it will be assumed from here on that the coverage analyser system is of this preferred form.

For the coverage analyser system to operate in this way, the instructions of the program to be tested have to include a test bit which is reserved for the use of the coverage analyser system. All instructions of the program are thus effectively 1 bit wider when it is being processed by the coverage analyser system compared to its normal operation.

It may be that the standard format for instructions includes one or more bits which are not normally used. If this is so, then one of these unused bits can be utilized by the coverage analyse:: system. It may also be that the standard format includes a parity bit, and that bit can be used for the present purposes (in which case the system will not then check the parity of the program).

The coverage analyser system initializes the program to be tested by setting the test bit in the instructions to 1, for example, which is called the 'set' state.

There are two basic strategies for performing the initialization of the program to be tested.

The first strategy is to set the test bit to 1 throughout the program, or complete blocks of it and then after exhaustive testing display in graphical form those words which have been executed. This is very simple to do. However, this strategy has the disadvantage that the test bit will be set in operands as well as instructions. If the program is constructed in such a way that each possible branch consists of a reasonably long sequence of instructions (possibly intermixed with data) forming a block which is largely separate from any other block, then the blocks which have been exercised in the processed program will generally be identifiable. However, the boundaries of the blocks may not generally be precisely identifiable, in which case it will be difficult to distinguish blocks (program branches) which have not been executed from stretches of pure operands. If the program has a number of short branches, then it will be difficult to determine the significance of the results of processing it without lengthy analysis of the program.

The second initialization strategy is to set the test bit for only selected words in the program. This can be achieved relatively easily by using an enhanced compiler when compiling the program from a high level language into machine code. Output can be taken from the compilation and build process such as map or object files and used to set the test bit of selected instructions.

In its simplest form, this involves setting the test bit to 1 for all instructions but for no other words (operands). In a more elaborate form, test bits can be generated only on instructions or operands defined, say, by PUBLIC labels.

Another but more complex way of setting test points is to analyse the program (using another piece of software) to generate a list of test points which covers all execution paths. This enables test points to be set, for example, only at branch instructions.

These methods have the benefit that the output of the coverage analyser system can be compared with the input data to provide a list of the selected instructions and/or operands which have not been executed. In addition, this enables a figure to be provided for the percentage of the selected instructions and/or operands which have been tested with reasonable accuracy.

As noted above, the processing of the program by the coverage analyser system involves running it, in essentially the way in which it would normally run, but with the overhead of the coverage analyser interrupting execution when a word with a set test bit is executed.

The coverage analysis system includes interrupt means responsive to the reserved bit position in an instruction, and means responsive thereto for recording the address of instructions having their test bit set as they are executed.

As noted above, timing related errors can only be detected accurately if the processing of the program during testing is performed at substantially the same speed as it is intended to be normally run. It is therefore desirable for the coverage analyser system to process the program at substantially that speed.

The coverage analyser system described herein enables test coverage to be monitored automatically without unduly affecting system performance. This is achieved by the provision of hardware to monitor the test bit of instructions as they :are executed in parallel with the processing of the respective instruction and by recording those instructions in which the test bit is set.

As shown in the Figure, the coverage analyser system comprises two main units, a memory 10 and a processing unit 11, coupled together by a data bus 12, an address bus 13, and a control bus 14. (In practice, there will also be various other units, not relevant for present purposes and therefore not shown.) The processing unit 11 includes a variety of subunits, including an instruction counter 15, an instruction register 16, a set of operand registers 17, and an arithmetic and logic unit (ALU) 18.

The operation of this system is briefly as follows. The contents of the instruction counter 15 are sent, as an address, over the address bus 13 to the memory 10, to extract an instruction which is passed back over the data bus 12 to the instruction register 16. The contents of this register are decoded by the processing unit 11, and control its operation, e.g. the processing of the contents of the operand registers 17 by means of the ALU 18. In addition, the instruction in register 16 may call for the reading of an operand from the memory 10 or the writing of an operand into it. For this, the operand's address (which may for example be included in the instruction) is sent to the memory 10 via the address bus 13, and the operand is sent to or received from the memory 10 over the data bus 12. The memory 10 is controlled by signals sent from the processing unit 11 via the control bus 14.

As so far described, this corresponds to a conventional computer system.

In the coverage analyser system, the memory width is effectively extended by 1 bit, as represented by an additional memory section 10A. This additional bit is used as the test bit in the program words. In addition, the system is provided with an interrupter unit 25 and an address latch 27 and the width of the data bus 12 is effectively extended by an additional 1 bit as represented by path 12A. This feeds the interrupt unit 25, which is also fed with control signals from the control bus 14 and directly from the processing unit 11. The program to be tested is loaded in the memory 10, along with the coverage analyser software and this effectively acts, for the operations we are currently considering, as an operating system which causes the coverage analyser system to process the program to be tested.

The interrupt unit 25 is arranged to detect when the test bit is set in a program instruction being processed by the coverage analyser system. The interrupt unit 25 knows, from the control signals fed to it, when an instruction is present on the data bus 12, and it therefore checks the state of the test bit at the appropriate time. (It is obviously not necessary to feed it with the rest of the instruction.)

When the interrupt unit 25 detects a test bit that is set, the address of the respective instruction is recorded in the address latch 27 and a non-maskable interrupt (NMI ) is generated. Checking means then checks that the interrupt was generated by the coverage analyser system. This can be done by providing a register (which may be the address latch 27) which contains the address of the relevant instruction when this is the source of the interrupt but which has some other known value (e.g. all 0's or all 1's) when an NMI is generated by some other part of the system. Alternatively, a separate bit (e.g. provided in programmable hardware) can be set to indicate that the NMI was caused by the coverage analyser system. The address held in the address latch 27 is then examined and the respective bit in the bit map is changed to record the execution of that address. The system then clears the test bit in the instruction which caused the interrupt to prevent it causing another interrupt should it is executed again. The program being tested is then restarted from the point where it was stopped by the interrupt.

Thus, an interrupt is initiated by the interrupt unit 25 when a program word has been detected, by the interrupt unit 25, as having its test bit set. The system then, checks that the interrupt was generated by the coverage analyser and if it was, clears the test bit in that word, determines its address, writes the word with the cleared bit back into that address, and then returns control to the coverage analysis program for the processing of the program to continue.

The interrupt servicing could also be performed by a stored subroutine forming part of the coverage analysis program. However, it is preferable to provide additional circuitry such as the interrupt unit 25 and the address latch 27 in the coverage analyser system for this purpose.

When the coverage analyser system runs the program to be tested, addresses and instructions will be passing between the main memory 10 containing the program and the processing unit 11. The processing unit 11 of the coverage analyser system matches that of the type of computer on which the program is designed to run, and when the coverage analyser is processing the program, there will be a corresponding passage or flow of program addresses and instructions between the main memory 10 and the processing -unit 11 of the coverage analyser.

The address latch 27 latches the address of an instruction or operand causing an interrupt. Since this is done in parallel with the processing of the respective instruction or operand, there is no loss of speed in the processing until an interrupt occurs, and, when an interrupt occurs, the address is available in the address latch 27 for recording in the memory 10.

In order for the processing unit 11 to obtain an instruction, it obviously has to contain the address of the instruction (in its instruction counter 15). Once the instruction has been fetched from memory 10, the processing unit 11 will also contain the instruction itself (in its instruction register 16). In some types of computer, it may be possible for the address of the instruction or operand causing an interrupt to be extracted from the processing unit 11. If that is so, then it is not necessary to provide a separate address latch. Similarly, the processing unit 11 may include control circuitry capable of performing the interrupt detection, in which case it is not necessary to provide a separate interrupt unit 25.

In many computers, there are only two buses between the memory 10 and the processing unit; a control bus, :and an. information bus (not shown) for data words (instructions and operands) and addresses. Thus operands, instructions, and addresses all flow over the same bus (at different times). In such computers, the nature of the information passing along the information bus is determined by what signals are present on the control bus 14. In such a case, the address latch 27 will be connected to the information bus.

The speed at which the coverage analyser system processes the program will match the speed at which the program normally runs as long as the test bit is clear in the data words being processed by the coverage analyser system. However, that speed will fall as soon as data words with their test bit set are reached. There is therefore a very small possibility of timing related errors in the program not being detected (or being falsely detected).

This possibility can, if desired, be largely overcome by aborting the program and restarting it each time an interrupt occurs although this will, of course, greatly reduce the rate at which the program is tested. A compromise is to abort and restart after some suitably chosen number of interrupts.

It will be realized that the effectiveness of the coverage analyser system will be reduced if the program to be tested moves instructions around during its running. However, there is rarely any need for a program to do this.

The coverage analyser system described above enables a software developer to achieve 100% test coverage or to give a figure which can be used to express the percentage of the test coverage. This figures can then be used to provide a notional figure for the potential number cf 'bugs' or errors remaining in the software. It also provides the software developer with a basis for balancing the time spent testing a program against the number of errors likely to be remaining so enabling the timing of program release to be optimised.

The coverage analyser system is particularly suitable for use with personal computers and provides features normally only available on much more expensive hardware systems.

It will also be appreciated that the setting of a test bit in instructions which are to be monitored as described above has a number of advantages. This is much simpler than inserting test code at selected points, the program to be tested can be easily initialised by using the system controller to set the test bit in selected instructions, and coverage analysis can be enabled and disabled by simply setting the system either to respond to the test bits or to ignore them.

The apparatus described above may also be used in a profile analysis system as described in co-pending application no. , publication no .

## Claims

1. A computer system for monitoring execution of a computer program to provide test coverage analysis thereof, the system comprising: a memory (10); processing means (11) for running a program stored in the memory (10); interrupt means (25) responsive to words of a program stored in the memory (10) in which a predetermined bit position (test bit) is in a predetermined (set) state and arranged to interrupt running of the program when such a word is executed; and recording means (10) for recording the words causing interrupts thereby recording which of the said words have been executed.

2. A computer system according to claim 1 wherein the recording means comprises means for writing, in a predetermined area of the memory (10), the a.addresses of the words causing the interrupts.

3. A computer system according to claim 2 wherein the recording means comprises means for setting, in a predetermined area of the memory (10) in which each bit represents a different word of the program, those bits corresponding to the addresses of the words causing the interrupts.

4. A computer system according to claim 1, 2 or 3 including initializing means for setting the test bit positions in at least some of the program :words to the predetermined state prior to running the program.

5. A computer system according to claim 4 wherein the initializing means is arranged to set the test bit in all program words.

6. A computer system according to claim 4 wherein the initializing means is arranged to set the test bit only in program instructions.

7. A computer system according to claim 6 wherein the initializing means is arranged to set the test bit only in program branch instructions.

8. A computer system according to any predeceding claim wherein the memory (10) has a word length of n+1 bits (n being an integer) and the processing unit (11) a width of n bits for running programs stored in the memory (10), the interrupt means (25) being responsive to the (n+1)th bit of words read from the memory (10).

9. A computer system according to any preceding claim wherein the interrupt means (25) comprises an address register (27) which latches the address of the current word being executed when an interrupt occurs.

10. A computer system according to claim 9 including checking means for checking whether an interrupt was caused by execution of a word in which the test bit ras in the set state.

11. A computer system according to claim 10 arranged such that once a word in which the test bit is in the set state has been executed, the test bit is cleared to prevent the word causing another interrupt should it be executed again.

12. A method of monitoring the execution of a computer program to provide test coverage analysis thereof, the method comprising: storing the program in a memory (10); running the program; detecting the execution of words of the program in which a predetermined bit position (test bit) is in a predetermined (set) state and thereupon interrupting the running of the program; and recording the words causing the interrupts thereby recording which of the said words have been executed.
